# EUROPEAN PATENT APPLICATION

(11) **EP 2 602 970 A1**
(43) Date of publication of application: **12.06.2013**
(21) Application number: 11780167.0
(22) Date of filing: 04.05.2011
(51) Int. Cl.: H04L 29/08

(54) **DATA ACQUISITION METHOD AND APPARATUS AND NETWORK STORAGE METHOD AND DEVICE**

(30) Priority: 05.08.2010 CN 201010246071
(71) Applicant: Huawei Technologies Co., Ltd., Shenzhen, Guangdong 518129 (CN)
(72) Inventor: HE, Jianfei, Shenzhen Guangdong 518129 (CN); SONG, Haibin, Shenzhen Guangdong 518129 (CN); WANG, Yong, Shenzhen Guangdong 518129 (CN); JIANG, Haifeng, Shenzhen Guangdong 518129 (CN)
(74) Representative: Epping - Hermann - Fischer
(86) International application number: PCT/CN2011/073639
(87) International publication number: WO 2011/140946

(57) **Abstract**

The present invention relates to the field of network communication, and in particular to a data obtaining method and apparatus, and a network storage method and device. The method includes: receiving a request for storing to-be-obtained data, where the request for storing the to-be-obtained data is sent by a service device, and the request for storing the to-be-obtained data includes the to-be-obtained data; storing the to-be-obtained data; receiving a request of a data obtaining apparatus for the to-be-obtained data, where the request includes storage location information about the to-be-obtained data; and returning the to-be-obtained data to the data obtaining apparatus according to the storage location information. By adopting the technical solutions provided in the embodiments of the present invention, data is obtained from the network storage device according to the storage location information about the to-be-obtained data in the network storage device. In this way, the universal data obtaining method and apparatus, and network storage method and device are provided for different network applications, thereby reducing complexity of the network storage device.

## Description

This application claims priority to Chinese Patent Application No. 201010246071.1, filed with Chinese Patent Office on August 5, 2010 and entitled "DATA OBTAINING METHOD AND APPARATUS, AND NETWORK STORAGE METHOD AND DEVICE", which is incorporated herein by reference in its entirety.

### FIELD OF THE INVENTION

The present invention relates to the field of network communication, and in particular to a data obtaining method and apparatus, and a network storage method and device.

### BACKGROUND OF THE INVENTION

Internet (Internet) applications are widely used in all aspects of society, and have great influences on social communication and economy. Internet-based society is coming. Content on the Internet develops from text and pictures to voice and video. Rich content promotes increase of traffic. Meanwhile, a broadband access technology is also making progress continuously. A bandwidth of a user increases from previous 64 kilobit per second (kilobit per second, kbps) to an order of magnitude of Mbit/s (Megabit per second, Mbps) by using a digital subscriber line (Digital Subscriber Line, DSL) technology; while optical access, for example, a fiber to the home (Fiber To The Home, FTTH) technology based on a passive optical network (Passive optical network, PON) technology may further improve an access speed to an order of magnitude of Gbit/s (Gigabit per second, Gbps) in future.

With promotion of the content and an access technology, at present, traffic in the Internet increases at a speed of more than 60 to 100% per year.

In the Internet network, the Internet Protocol (Internet Protocol, IP) is a basic service bearer protocol. A router implementing IP packet forwarding is a core device for Internet service forwarding, and its capacity becomes larger and larger with the increase of the traffic. However, because of a packet-by-packet forwarding feature of the router, in a case of large capacity, for example, over Terabit per second (Terabit per second, Tbps), power consumption and volume of the router grows larger gradually, design of the router also becomes more and more difficult, and the cost of the router becomes higher and higher. Meanwhile, because an operator mainly charges from Internet access at present, there is no motivation to invest in expansion of a backbone network. The backbone network becomes a bottleneck affecting the Internet applications and customer experience.

One of methods for solving this problem is to implement traffic localization. A network burden brought by accessing content by a user is reduced by storing the content in a place which is closer to the user. At present, there are mainly two methods for implementing traffic localization: deploying intelligent cache and establishing a content delivery network (content delivery network, CDN).

With the intelligent cache, by using technologies such as deep packet inspection (Deep packet inspection, DPI), traffic in the Internet is inspected and analyzed, and hot content is cached. When the user has an access requirement, a request is captured, and the request is redirected to a cache node, which shortens a distance from the content to the user, thereby reducing requirements of the user for the backbone network. However, implementation of traffic analysis technologies such as the DPI is complex and costly. In addition, because the DPI technology is complex, it is difficult to implement processing of heavy traffic.

By deploying node servers in the network, a layer of intelligent virtual network is constructed on the basis of the existing Internet according to the CDN. In a CDN system, according to comprehensive information such as network traffic, connection and load statuses of each node, a distance to the user, and response time, a request of a user is redirected to a service node which is the closest to the user. With a CDN technology, services of content delivery are implemented. However, requirements for the content delivery are different when applications are different, for example, Web acceleration and video delivery. Therefore, it is required that a node server supports different protocols when the applications are different, which improves complexity of the node server.

### SUMMARY OF THE INVENTION

Embodiments of the present invention aim at providing a data obtaining method and apparatus, and a network storage method and device, which are used to solve a problem that different data storage and obtaining manners are required for different network applications.

The objectives of the embodiments of the present invention are achieved through the following technical solutions:
A data obtaining method includes:
   requesting to-be-obtained data from a service device;
   receiving a redirection message sent by the service device, where the redirection message includes an address of a network storage device that stores the to-be-obtained data, and storage location information about the to-be-obtained data in the network storage device;
   requesting the to-be-obtained data from the network storage device according to the address of the network storage device that stores the to-be-obtained data, and the storage location information about the to-be-obtained data in the network storage device; and
   obtaining the to-be-obtained data sent by the network storage device.

A network storage method includes:
receiving a request for storing to-be-obtained data, where the request for storing the to-be-obtained data is sent by a service device, and the request for storing the to-be-obtained data includes the to-be-obtained data;
storing the to-be-obtained data;
receiving a request of a data obtaining apparatus for the to-be-obtained data, where the request includes storage location information about the to-be-obtained data; and returning the to-be-obtained data to the data obtaining apparatus according to the
storage location information.

A network storage device includes:
a first receiving unit, configured to receive a request for storing to-be-obtained data,
where the request for storing the to-be-obtained data is sent by a service device, and
the request for storing the to-be-obtained data includes the to-be-obtained data;
a storage unit, configured to store the to-be-obtained data;
a second receiving unit, configured to receive a request of a data obtaining apparatus for the to-be-obtained data, where the request includes storage location information about the to-be-obtained data; and
a returning unit, configured to return the to-be-obtained data to the data obtaining apparatus according to the storage location information.

A data obtaining apparatus includes:
a first requesting unit, configured to request to-be-obtained data from a service device;
a receiving unit, configured to receive a redirection message sent by the service device, where the redirection message includes an address of a network storage device that stores the to-be-obtained data, and storage location information about the to-be-obtained data in the network storage device;
a second requesting unit, configured to request the to-be-obtained data from the network storage device according to the address of the network storage device that stores the to-be-obtained data, and the storage location information about the to-be-obtained data in the network storage device; and
an obtaining unit, configured to obtain the to-be-obtained data sent by the network storage device.

By adopting the technical solutions provided in the embodiments of the present invention, data is obtained from the network storage device according to the storage location information about the to-be-obtained data in the network storage device. In this way, the universal data obtaining method and apparatus, and network storage method and device are provided for different network applications, thereby reducing complexity of the network storage device.

### BRIEF DESCRIPTION OF THE DRAWINGS

To describe the technical solutions in the embodiments of the present invention or the prior art more clearly, accompanying drawings required for describing the embodiments or the prior art are briefly introduced below. Apparently, the accompanying drawings in the following description are merely some embodiments of the present invention, and a person having ordinary skill in the art may further obtain other drawings according to these accompanying drawings without making creative efforts.
FIG. 1 is a flowchart of a data obtaining method according to an embodiment of the present invention;
FIG. 2 is a flowchart of a network storage method according to another embodiment of the present invention;
FIG. 3 is a block diagram of a data obtaining apparatus according to another embodiment of the present invention; and
FIG. 4 is a block diagram of a network storage device according to another embodiment of the present invention.

### DETAILED DESCRIPTION OF THE EMBODIMENTS

Specific implementation processes of the present invention are illustrated through embodiments in the following. Obviously, the embodiments to be described are merely part of rather than all of the embodiments of the present invention. Based on the embodiments of the present invention, all other embodiments obtained by a person having ordinary skill in the art without making creative efforts shall fall within the protection scope of the present invention.

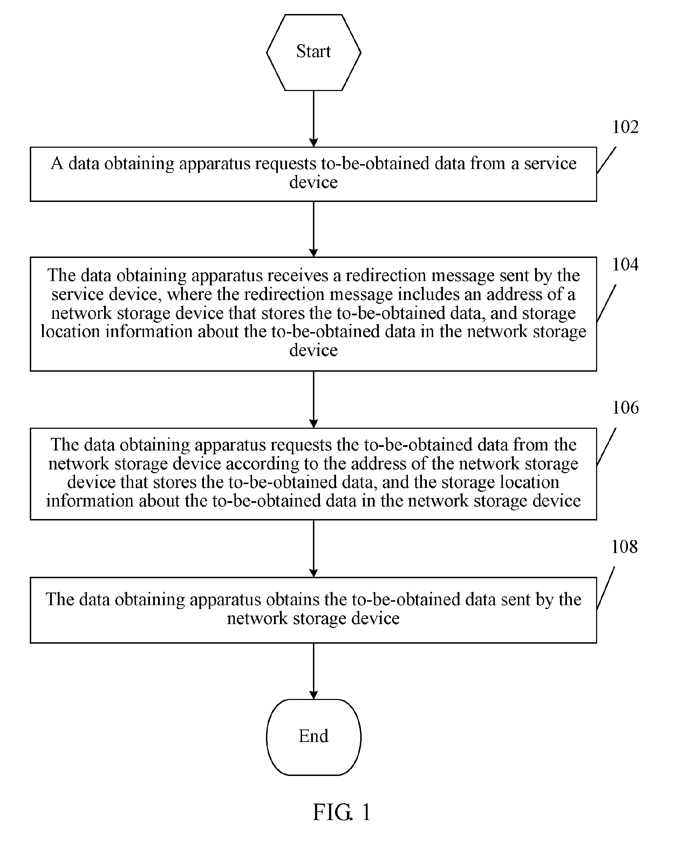

FIG. 1 is a flowchart of a data obtaining method according to an embodiment of the present invention. The method includes:
102: A data obtaining apparatus requests to-be-obtained data from a service device.

The foregoing data obtaining apparatus is a client device that requests obtaining data of a network application. The client device may usually be a personal computer, a mobile Internet device, a mobile phone, a set-top box, a television set, and so on.

The foregoing service device may be a service device belonging to an application service provider, such as a VOD server of a Video On Demand (Video On Demand, VOD) service provider, or a Website server of a World Wide Web (World Wide Web, WWW) storage service provider. The service device may also belong to an individual user. As an application service provider, the user provides an application service for a data obtaining apparatus. In this case, the service device may also be a personal computer, a mobile Internet device, a mobile phone, a set-top box, a television set, and so on. The application service provider purchases a network storage resource from a network storage service provider. The network storage resource may be indicated by storage capacity, a network reading/writing bandwidth, or the number of users of concurrent access, and so on.

When the data obtaining apparatus requests the to-be-obtained data from the service device, multiple different protocols, such as a Hypertext Transfer Protocol (HTTP, HyperText Transfer Protocol), may be adopted and may utilize an application based on a User Datagram Protocol (User Datagram Protocol, UDP) or a Transmission Control Protocol (Transmission Control Protocol, TCP) to request the to-be-obtained data from the service device, for example, a file transfer protocol based on a peer-to-peer (Peer-to-Peer, P2P) architecture or a file transfer function of instant messaging software.

Before 102, a service device may store service data provided by itself in a network storage device provided by a network storage service provider. The foregoing to-be-obtained data is part of the service data stored by the service device in the network storage device, or the to-be-obtained data is the foregoing service data. When the to-be-obtained data is the foregoing service data, the network storage device receives a request for storing the to-be-obtained data, where the request for storing the to-be-obtained data is sent by the service device, and the request includes the to-be-obtained data. The network storage device stores the to-be-obtained data. The network storage device sends storage location information about the to-be-obtained data to the service device. When the to-be-obtained data is part of the service data, the network storage device receives the service data that includes the to-be-obtained data and is sent by the service device, and stores the service data. The network storage device sends storage location information about the service data to the service device, where the storage location information includes the storage location information about the to-be-obtained data. For example, the service device stores three segments of video data in the network storage device; the network storage device sends storage location information about the three segments of video data to the service device; when the data obtaining apparatus requests a certain segment of video data from the service device, the service device may respond to the request of the data obtaining apparatus according to storage location information about this segment of video data in the network storage device.

The service device may also receive storage location information about existing data in the network storage device. When the data obtaining apparatus requests the data from the service device, the service device may respond to the request of the data obtaining apparatus according to the storage location information. For example, if the service device is a VOD server of a certain service provider, and another service provider has stored a segment of video data in the network storage device, the VOD server may directly obtain storage location information about the video data according to a license agreement between service providers, without the need of storing again. Alternatively, when the VOD server stores same video data, if the network storage device finds that another service provider has stored the video data, the video data is not stored again, but storage location information is directly sent to the service device.

When the service device fixedly shares a segment of storage space of the network storage device, the service device may also directly send, in the request for storing the to-be-obtained data, where the request for storing the to-be-obtained data is sent by the service device, service data including the to-be-obtained data, and storage location information specifying a storage location of the service data to the network storage device. The network storage device stores the service data according to the storage location information. In this case, the network storage device does not need to send the storage location information to the service device.

The network storage device may provide a security assurance capability to separate network storage resources belonging to different data obtaining apparatuses or users using the data obtaining apparatus, which prevents the data obtaining apparatuses or the users using the data obtaining apparatus from accessing an unauthorized network storage resource. For example, virtual disks are set for different service devices, and each virtual disk has its own access right control. In this case, the network storage device may have multiple domain names (domain name) or IP addresses, which respectively correspond to different virtual disks. Before receiving the request for storing the to-be-obtained data, where the request for storing the to-be-obtained data is sent by the service device, the network storage device may select a domain name or an IP address, where the domain name or the IP address corresponds to the service device, from the multiple domain names or IP addresses, and send the selected domain name or IP address to the service device.

The network storage device may also be connected to multiple storage sub-devices. For example, the network storage device is a router, the router is connected to multiple devices having a network storage function, and these devices are managed by the network storage device. The network storage device and its connected multiple storage sub-devices have independent IP addresses. In this case, the network storage device sends, to the service device, its own domain name or IP address, and an IP address of a storage sub-device that the service device has a right to access. The IP address of the storage sub-device may be sent as part of storage location information.

The service device may write same data into different network storage devices to provide data backup and disaster tolerance capabilities. When writing the same data into different network storage devices, the service device may write the data into only one of the network storage devices, and instruct the network storage device to copy the data onto another network storage device. The service device may also delete specific data in specific network storage according to a policy.

The network storage device may be a network node having a data storage capability. A network storage capability includes operations such as reading, writing, and deleting for the network storage device through a network. For example, the network storage capability is introduced into the network node in the following manners: adding a board inside the network node, where the board integrates a storage capability; adding a board inside the network node, where the board provides a storage interface, and the storage interface is connected to an external storage resource, such as a disk array and a solid state disk (Solid State Disk, SSD); setting an independent device having a storage capability outside the network node, where the device is connected to the network node through a network interface; setting an independent device outside the network node, where the device is connected to the network node through a network interface, and the independent device provides a storage interface for connecting to an external storage resource.

104: The data obtaining apparatus receives a redirection message sent by the service device, where the redirection message includes an address of a network storage device that stores the to-be-obtained data, and storage location information about the to-be-obtained data in the network storage device.

The service device sends the redirection message to the data obtaining apparatus according to the request of the data obtaining apparatus. The redirection message includes the address of the network storage device and the storage location information about the to-be-obtained data in the network storage device. When multiple network storage devices have the to-be-obtained data requested by the data obtaining apparatus, the service device may select an address of one or multiple network storage devices and its storage location information according to a preconfigured policy, and send the address of the one or multiple network storage devices and its storage location information to the data obtaining apparatus by using the redirection message. For example, the preconfigured policy may be one or multiple of the following policies: selecting a network storage device which is the closest to the data obtaining apparatus, selecting a network storage device whose network service provider (Network service provider, NSP) is the same as that of the data obtaining apparatus, selecting a current idle network storage device (the number of data obtaining apparatuses accessing the network storage device is small). When the service device selects multiple network storage devices, priorities may be assigned to these network storage devices in the redirection message. The data obtaining apparatus may select one or multiple network storage devices having a highest priority from available network storage devices to obtain the to-be-obtained data.

The service device may also select multiple network storage devices for providing parts of the to-be-obtained data separately. For example, the service device divides one segment of video data into three segments, which are separately stored in three network storage devices. The service device sends the redirection message to the data obtaining apparatus, where the redirection message includes addresses of the three network storage devices and storage location information about the parts of the to-be-obtained data separately stored in the network storage devices. After obtaining the parts of the to-be-obtained data, the data obtaining apparatus reconstructs, according to the parts of the to-be-obtained data, the to-be-obtained data. The service device may also divide the to-be-obtained data into multiple parts, and stores these parts in each network storage device. When the service device sends the redirection message to the data obtaining apparatus, the redirection message includes the multiple network storage devices for separately providing one or multiple parts of the to-be-obtained data. By using this manner, a speed of obtaining the to-be-obtained data by the data obtaining apparatus is increased.

The storage location information about the to-be-obtained data in the network storage device may be represented by block (block) information or file information of the stored to-be-obtained data, according to different protocols supported by the network storage device.

When the network storage device supports a block-based storage access protocol, for example, supports an Internet Small Computer System Interface (Internet Small Computer System Interface, iSCSI), the block information of the stored to-be-obtained data may be used to represent the storage location information. For example, the storage location information may be represented as a location of a start block of the to-be-obtained data in the network storage device and the number of blocks of the to-be-obtained data; a location of a start block of the to-be-obtained data in the network storage device and a location of an end block of the to-be-obtained data in the network storage device; or the number of blocks of the to-be-obtained data and a location of an end block of the to-be-obtained data in the network storage device. When the to-be-obtained data is not stored continuously in the network storage device, the storage location information may also be a combination of multiple pieces of block information. When the network storage device separately assigns a virtual disk for each service device, a mapping from a physical storage location to its virtual disk is established. For example, if a location of the to-be-obtained data stored by a service device in a physical resource is an 11^{th} block to a 100^{th} block, and the service device uses a No. 10 virtual disk, the to-be-obtained data is mapped to a 1^{st} block to a 90^{th} block in the No. 10 virtual disk. In this case, the storage location information includes a virtual disk identity and block information.

When the network storage device supports a file-based network file system, for example, supports a Network File System (Network File System, NFS) or a Server Message Block (Server Message Block, SMB), the file information may be used to represent the storage location information. For example, the storage location information may be represented as a directory of the to-be-obtained data in the network storage device and a file name of the to-be-obtained data; or an object name of the to-be-obtained data in the network storage device.

The address of the network storage device may be a domain name of the network storage device or an IP address of the network storage device, and may also be a specific identity, for example, the specific identity may be an iSCSI name in an iSCSI protocol. For the iSCSI protocol, the address of the network storage device is generally represented by the iSCSI name. After obtaining the iSCSI name, a user obtains the IP address of the network storage device by using an Internet Storage Name Service (Internet Storage Name Service, iSNS). The iSNS is generally applied in an enterprise network (enterprise network), and it is required that an iSNS server is deployed in each enterprise network. The iSNS is not applicable to a carrier network. Therefore, in the embodiment of the present invention, the service device directly sends the domain name of the network storage device or the IP address of the network storage device to the data obtaining apparatus, which may avoid deployment of the iSNS server, so that the network storage device may be deployed in a wide area network (Wide Area Network, WAN).

When the network storage device is also connected to multiple storage sub-devices, the storage location information about the to-be-obtained data in the network storage device may also include IP addresses of the storage sub-devices.

106: The data obtaining apparatus requests the to-be-obtained data from the network storage device according to the address of the network storage device that stores the to-be-obtained data, and the storage location information about the to-be-obtained data in the network storage device. The data obtaining apparatus is redirected to the network storage device according to the address that is of the network storage device and in the redirection message. The address of the network storage device may be the domain name of the network storage device or the IP address of the network storage device, and may also be the specific identity, for example, the specific identity may be the iSCSI name in the iSCSI protocol. The data obtaining apparatus sends a request for obtaining the to-be-obtained data to the address of the network storage device. The request may be an iSCSI message, an NFS message, or an SMB message according to different protocols supported by the network storage device. The request includes the storage location information about the to-be-obtained data in the network storage device.

A protocol between the data obtaining apparatus and the network storage device is independent of a protocol between the data obtaining apparatus and the service device, and different protocol types are adopted. Therefore, when the data obtaining apparatus requests the to-be-obtained data from the service device, no matter whether the HTTP protocol, or the P2P architecture-based file transfer protocol, or the file transfer function of the instant messaging software is adopted, after being redirected to the network storage device, the data obtaining apparatus obtains the to-be-obtained data by adopting protocols, such as iSCSI, NFS, or SMB, that may directly read data from corresponding storage location information in the network storage device according to the storage location information. In this way, the network storage device does not need to support various complex protocols, thereby reducing complexity of the network storage device.

108: The data obtaining apparatus obtains the to-be-obtained data sent by the network storage device.

If the data obtaining apparatus separately receives the parts of the to-be-obtained data from the multiple network storage devices, the data obtaining apparatus also needs to reconstruct the to-be-obtained data according to these parts to obtain the to-be-obtained data.

The network storage device may authenticate the data obtaining apparatus or a user using the data obtaining apparatus, and there may be multiple authentication manners.

For example, the application service provider determines authentication information about data obtaining apparatuses or users using the data obtaining apparatus, that is, it is set that which data obtaining apparatuses or users using the data obtaining apparatus may read or rewrite the data, and network resources are allocated to the data obtaining apparatuses or the users using the data obtaining apparatus. A service device of the application service provider sends the authentication information about the data obtaining apparatus to the network storage device. The application service provider may send the authentication information to the network storage device in an encryption manner, for example, by using transport security protocols such as Internet Protocol Security (Internet Protocol Security, IPsec), Transport Layer Security (Transport Layer Security, TLS), or Datagram Transport Layer Security (Datagram Transport Layer Security, DTLS).

The authentication information may be represented by an access control list (access control list, ACL). The ACL is stored in the network storage device. For example, the ACL may be represented as "Content-XYZ # access-list N permit R UserIDx AllowedBWx AllowedConnectionsx", where "Content-XYZ" is an identity (Identity, ID) of the to-be-obtained data. "N" is a sequence number of the ACL, which facilitates an overall operation performed by the application service provider on a group of the ACL. "permit" identifies permission. "R" identifies that a right is a read right. "UserIDx" is an ID of the data obtaining apparatus or the user using the data obtaining apparatus, may be a fixed-length character string set by the application service provider, and is used for uniquely identifying, on the network storage device, the data obtaining apparatus or the user using the data obtaining apparatus; and an IP address of the data obtaining apparatus may also be used as the ID of the data obtaining apparatus, or the ID of the user and an IP address of the data obtaining apparatus may be used together. "AllowedBWx" is an authorized access bandwidth, and "AllowedConnectionsx" is the number of allowed connections. The ACL may also include a public key and a signature algorithm that are of the user using the data obtaining apparatus. The network storage device verifies a signature after receiving the request of the data obtaining apparatus to authenticate the user using the data obtaining apparatus.

After the application service provider determines the authentication information about the data obtaining apparatuses or the users using the data obtaining apparatus, the service device does not need to send the authentication information to the network storage device in advance. After receiving the request of the data obtaining apparatus for the to-be-obtained data, the service device sends the authentication information to the network storage device.

When the network storage device knows a public key and a signature algorithm that are of the service device, after receiving the request of the data obtaining apparatus for the to-be-obtained data, the service device may also sign the authentication information by using its own private key, and then send the authentication information to the data obtaining apparatus. The authentication information may include the ID of the to-be-obtained data. Optionally, the authentication information may also include the ID of the data obtaining apparatus or the user using the data obtaining apparatus, and a right of the data obtaining apparatus or the user using the data obtaining apparatus. Optionally, the authentication information may also include a network resource allocated to the data obtaining apparatus or the user using the data obtaining apparatus. Optionally, the authentication information may also include the public key and the signature algorithm that are of the user using the data obtaining apparatus, or a certificate of the user using the data obtaining apparatus. Parts of the foregoing authentication information may be signed separately or signed together. Because the authentication information is signed by the service device, the data obtaining apparatus cannot tamper with it. The data obtaining apparatus uses a private key of the user using the data obtaining apparatus to sign the authentication information and then sends the signed authentication information to the network storage device. The network storage device authenticates, according to the foregoing authentication information, the data obtaining apparatus or the user using the data obtaining apparatus.

The network storage device may also send the authentication information to the service device or a dedicated authentication service apparatus for authentication by using a protocol. The foregoing protocol may be a Remote Authentication Dial In User Service (Remote Authentication Dial In User Service, RADIUS) or Diameter (Diameter) protocol. The service device or the dedicated authentication service apparatus returns an authentication and authorization result to the network storage device.

When sending the to-be-obtained data, the network storage device may perform resource control according to a network storage resource purchased by the application service provider from the network storage service provider. For example, a certain application service provider purchases a certain amount of network bandwidth, and the application service provider may authorize multiple data obtaining apparatuses. In this case, the network storage device may limit total sending traffic of all to-be-obtained data of the application service provider to keep the total sending traffic below the network bandwidth purchased by the service provider. The network storage device may control a bandwidth of each data obtaining apparatus or each type of data obtaining apparatuses. The network storage device may also allocate a corresponding network resource to a data obtaining apparatus according to authorized resource information of the data obtaining apparatus. For example, if the application service provider purchases a certain network resource, for example, bandwidth, and provides different resources for each data obtaining apparatus that accesses to-be-obtained data provided by it, the service device sends the authorized resource information together to the data obtaining apparatus, the data obtaining apparatus carries the authorized resource information when requesting the to-be-obtained data, and the network storage device performs resource control according to the authorized resource information.

The network storage device may also control the number of connections of the data obtaining apparatus according to the number of connections. For example, if a certain application service provider purchases connection capabilities for 90 data obtaining apparatuses, when a 91^{st} data obtaining apparatus requests the to-be-obtained data from the network storage device, the network storage device may reject the request.

The network storage device may also provide a security assurance capability to separate network storage resources belonging to different data obtaining apparatuses or users using the data obtaining apparatus, which prevents the data obtaining apparatuses or the users using the data obtaining apparatus from accessing an unauthorized network storage resource. For example, virtual disks are set for different service devices, and each virtual disk has its own access right control.

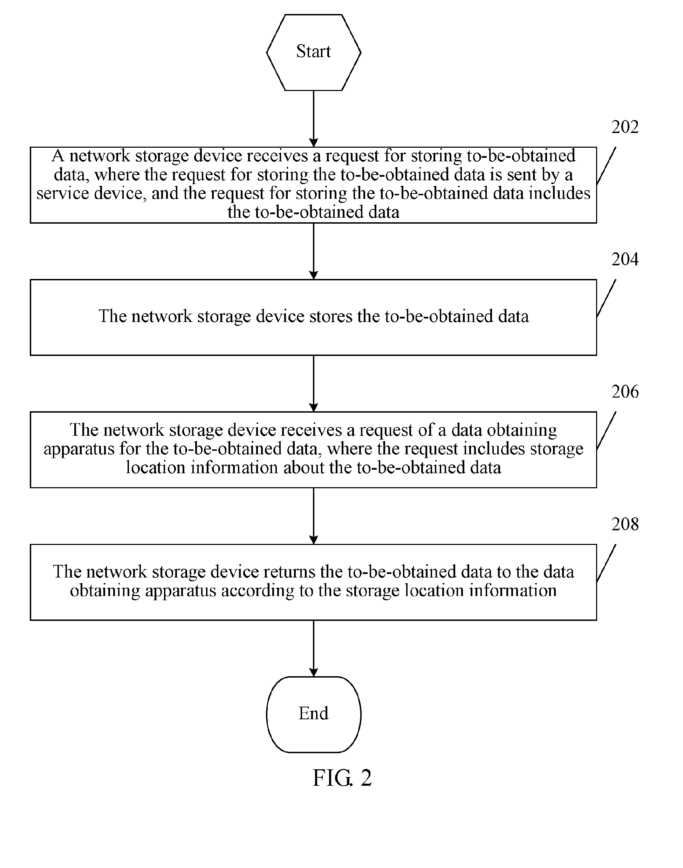

FIG. 2 is a flowchart of a network storage method according to another embodiment of the present invention. The method includes:
202: A network storage device receives a request for storing to-be-obtained data, where the request for storing the to-be-obtained data is sent by a service device, and the request for storing the to-be-obtained data includes the to-be-obtained data.

The network storage device may be a network node having a data storage capability. A network storage capability includes operations such as reading, writing, and deleting for the network storage device through a network. For example, the network storage capability is introduced into the network node in the following manners: adding a board inside the network node, where the board integrates a storage capability; adding a board inside the network node, where the board provides a storage interface, and the storage interface is connected to an external storage resource, such as a disk array and a solid state disk; setting an independent device having a storage capability outside the network node, where the device is connected to the network node through a network interface; setting an independent device outside the network node, where the device is connected to the network node through a network interface, and the independent device provides a storage interface for connecting to an external storage resource.

The foregoing service device may be a service device belonging to an application service provider, such as a VOD server of a VOD service provider, or a Website server of a World Wide Web storage service provider. The service device may also belong to an individual user. As an application service provider, the user provides an application service for a data obtaining apparatus. In this case, the service device may also be a personal computer, a mobile Internet device, a mobile phone, a set-top box, a television set, and so on. The application service provider purchases a network storage resource from a network storage service provider. The network storage resource may be indicated by storage capacity, a network reading/writing bandwidth, or the number of users of concurrent access, and so on.

The service device may store service data provided by itself in the network storage device provided by the network storage service provider by adopting a manner of sending the request for storing the to-be-obtained data. The to-be-obtained data is part of the service data stored by the service device in the network storage device, or the to-be-obtained data is the foregoing service data.

When the service device fixedly shares a segment of storage space of the network storage device, the service device may also directly send, in the request for storing the to-be-obtained data, where the request for storing the to-be-obtained data is sent by the service device, service data including the to-be-obtained data, and storage location information specifying a storage location of the service data to the network storage device.

The network storage device may provide a security assurance capability to separate network storage resources belonging to different data obtaining apparatuses or users using the data obtaining apparatus, which prevents the data obtaining apparatuses or the users using the data obtaining apparatus from accessing an unauthorized network storage resource. For example, virtual disks are set for different service devices, and each virtual disk has its own access right control. In this case, the network storage device may have multiple domain names or IP addresses, which respectively correspond to different virtual disks. Before receiving the request for storing the to-be-obtained data, where the request for storing the to-be-obtained data is sent by the service device, the network storage device may select a domain name or an IP address, where the domain name or the IP address corresponds to the service device, from the multiple domain names or IP addresses, and send the selected domain name or IP address to the service device.

The service device may write same data into different network storage devices to provide data backup and disaster tolerance capabilities. When writing the same data into different network storage devices, the service device may write the data into only one of the network storage devices, and instruct the network storage device to copy the data onto another network storage device. The service device may also delete specific data in specific network storage according to a policy.

204: The network storage device stores the to-be-obtained data.

After storing the to-be-obtained data, the network storage device may also send storage location information about the to-be-obtained data to the service device. When the to-be-obtained data is the foregoing service data, the network storage device receives the request for storing the to-be-obtained data, where the request for storing the to-be-obtained data is sent by the service device. The request includes the to-be-obtained data. The network storage device stores the to-be-obtained data. When the to-be-obtained data is part of the service data, the network storage device receives the service data which includes the to-be-obtained data and is sent by the service device, and stores the service data. The network storage device sends storage location information about the service data to the service device. The storage location information includes the storage location information about the to-be-obtained data. For example, the service device stores three segments of video data into the network storage device; the network storage device sends storage location information about the three segments of video data to the service device; when the data obtaining apparatus requests a certain segment of video data from the service device, the service device may respond to the request of the data obtaining apparatus according to storage location information about this segment of video data in the network storage device.

The network storage device may also be connected to multiple storage sub-devices. For example, the network storage device is a router, the router is connected to multiple devices having a network storage function, and these devices are managed by the network storage device. The network storage device and its connected multiple storage sub-devices have independent IP addresses. In this case, the network storage device sends, to the service device, its own domain name or IP address, and an IP address of a storage sub-device that the service device has a right to access. The IP address of the storage sub-device may be sent as part of storage location information.

When the service device directly sends, in the request for storing the to-be-obtained data, where the request for storing the to-be-obtained data is sent by the service device, the service data including the to-be-obtained data, and the storage location information specifying the storage location of the service data to the network storage device, the network storage device stores the service data according to the storage location information. In this case, the network storage device does not need to send the storage location information to the service device.

The storage location information about the to-be-obtained data in the network storage device may be represented by block information or file information of the stored to-be-obtained data, according to different protocols supported by the network storage device.

When the network storage device supports a block-based storage access protocol, for example, supports an iSCSI, the block information of the stored to-be-obtained data may be used to represent the storage location information. For example, the storage location information may be represented as a location of a start block of the to-be-obtained data in the network storage device and the number of blocks of the to-be-obtained data; a location of a start block of the to-be-obtained data in the network storage device and a location of an end block of the to-be-obtained data in the network storage device; or the number of blocks of the to-be-obtained data and a location of an end block of the to-be-obtained data in the network storage device. When the to-be-obtained data is not stored continuously in the network storage device, the storage location information may also be a combination of multiple pieces of block information. When the network storage device separately assigns a virtual disk for each service device, a mapping from a physical storage location to its virtual disk is established. For example, if a location of the to-be-obtained data stored by a service device in a physical resource is an 11^{th} block to a 100^{th} block, and the service device uses a No. 10 virtual disk, the to-be-obtained data is mapped to a 1^{st} block to a 90^{th} block in the No. 10 virtual disk. In this case, the storage location information includes a virtual disk identity and block information.

When the network storage device supports a file-based network file system, for example, an NFS or an SMB, the file information may be used to represent the storage location information. For example, the storage location information may be represented as a directory of the to-be-obtained data in the network storage device and a file name of the to-be-obtained data; or an object name of the to-be-obtained data in the network storage device.

When the network storage device is also connected to multiple storage sub-devices, the storage location information about the to-be-obtained data in the network storage device may also include IP addresses of the storage sub-devices.

206: The network storage device receives a request of the data obtaining apparatus for the to-be-obtained data, where the request includes the storage location information about the to-be-obtained data.

The foregoing data obtaining apparatus is a client device that requests obtaining data of a network application. The client device may usually be a personal computer, a mobile Internet device, a mobile phone, a set-top box, a television set, and so on.

The data obtaining apparatus requests the to-be-obtained data from the service device, and receives a redirection message sent by the service device. The data obtaining apparatus is redirected to the network storage device according to an address that is of the network storage device and in the redirection message. The address of the network storage device may be a domain name of the network storage device or an IP address of the network storage device, and may also be a specific identity, for example, the specific identity may be an iSCSI name in an iSCSI protocol. The data obtaining apparatus sends a request for obtaining the to-be-obtained data to the address of the network storage device. The request may be an iSCSI message, an NFS message, or an SMB message according to different protocols supported by the network storage device. The request includes the storage location information about the to-be-obtained data in the network storage device.

The address of the network storage device may be the domain name of the network storage device or the IP address of the network storage device, and may also be the specific ID, for example, the specific identity may be the iSCSI name in the iSCSI protocol. For the iSCSI protocol, the address of the network storage device is generally represented by the iSCSI name. After obtaining the iSCSI name, a user obtains the IP address of the network storage device by using an Internet storage name service. The iSNS is generally applied in an enterprise network, and it is required that an iSNS server is deployed in each enterprise network. The iSNS is not applicable to a carrier network. Therefore, in the embodiment of the present invention, the service device directly sends the domain name of the network storage device or the IP address of the network storage device to the data obtaining apparatus, which may avoid deployment of the iSNS server, so that the network storage device may be deployed in a wide area network.

When the data obtaining apparatus requests the to-be-obtained data from the service device, multiple different protocols, such as an HTTP protocol, may be adopted and may utilize a UDP-based or TCP-based application to request the to-be-obtained data from the service device, for example, a peer-to-peer architecture-based file transfer protocol or a file transfer function of instant messaging software.

A protocol between the data obtaining apparatus and the network storage device is independent of a protocol between the data obtaining apparatus and the service device, and different protocol types are adopted. Therefore, when the data obtaining apparatus requests the to-be-obtained data from the service device, no matter whether the HTTP protocol, or the P2P architecture-based file transfer protocol, or the file transfer function of the instant messaging software is adopted, after being redirected to the network storage device, the data obtaining apparatus obtains the to-be-obtained data by adopting protocols, such as iSCSI, NFS, or SMB, that may directly read data from corresponding storage location information in the network storage device according to the storage location information. In this way, the network storage device does not need to support various complex protocols, thereby reducing complexity of the network storage device.

208: The network storage device returns the to-be-obtained data to the data obtaining apparatus according to the storage location information.

The network storage device may authenticate the data obtaining apparatus or a user using the data obtaining apparatus, and there may be multiple authentication manners.

For example, the application service provider determines authentication information about data obtaining apparatuses or users using the data obtaining apparatus, that is, it is set that which data obtaining apparatuses or users using the data obtaining apparatus may read or rewrite the data, and network resources are allocated to the data obtaining apparatuses or the users using the data obtaining apparatus. A service device of the application service provider sends the authentication information about the data obtaining apparatus to the network storage device. The application service provider may send the authentication information to the network storage device in an encryption manner, for example, by using transport security protocols such as IPsec, TLS, or DTLS.

The authentication information may be represented by an ACL. The ACL is stored in the network storage device. For example, the ACL may be represented as "Content-XYZ # access-list N permit R UserIDx AllowedBWx AllowedConnectionsx", where "Content-XYZ" is an identity of the to-be-obtained data. "N" is a sequence number of the ACL, which facilitates an overall operation performed by the application service provider on a group of the ACL. "permit" identifies permission. "R" identifies that a right is a read right. "UserIDx" is an ID of the data obtaining apparatus or the user using the data obtaining apparatus, may be a fixed-length character string set by the application service provider, and is used for uniquely identifying, on the network storage device, the data obtaining apparatus or the user using the data obtaining apparatus; and an IP address of the data obtaining apparatus may also be used as the ID of the data obtaining apparatus, or the ID of the user and an IP address of the data obtaining apparatus may be used together. "AllowedBWx" is an authorized access bandwidth, and "AllowedConnectionsx" is the number of allowed connections. The ACL may also include a public key and a signature algorithm that are of the user using the data obtaining apparatus. The network storage device verifies a signature after receiving the request of the data obtaining apparatus to authenticate the user using the data obtaining apparatus.

After the application service provider determines the authentication information about the data obtaining apparatuses or the users using the data obtaining apparatus, the service device does not need to send the authentication information to the network storage device in advance. After receiving the request of the data obtaining apparatus for the to-be-obtained data, the service device sends the authentication information to the network storage device.

When the network storage device knows a public key and a signature algorithm that are of the service device, after receiving the request of the data obtaining apparatus for the to-be-obtained data, the service device may also sign the authentication information by using its own private key, and then send the authentication information to the data obtaining apparatus. The authentication information may include the ID of the to-be-obtained data. Optionally, the authentication information may also include the ID of the data obtaining apparatus or the user using the data obtaining apparatus, and a right of the data obtaining apparatus or the user using the data obtaining apparatus. Optionally, the authentication information may also include a network resource allocated to the data obtaining apparatus or the user using the data obtaining apparatus. Optionally, the authentication information may also include the public key and the signature algorithm that are of the user using the data obtaining apparatus, or a certificate of the user using the data obtaining apparatus. Parts of the foregoing authentication information may be signed separately or signed together. Because the authentication information is signed by the service device, the data obtaining apparatus cannot tamper with it. The data obtaining apparatus uses a private key of the user using the data obtaining apparatus to sign the authentication information and then sends the signed authentication information to the network storage device. The network storage device authenticates, according to the foregoing authentication information, the data obtaining apparatus or the user using the data obtaining apparatus.

The network storage device may also send the authentication information to the service device or a dedicated authentication service apparatus for authentication by using a protocol. The foregoing protocol may be a RADIUS or Diameter protocol. The service device or the dedicated authentication service apparatus returns an authentication and authorization result to the network storage device.

When sending the to-be-obtained data, the network storage device may perform resource control according to a network storage resource purchased by the application service provider from the network storage service provider. For example, a certain application service provider purchases a certain amount of network bandwidth, and the application service provider may authorize multiple data obtaining apparatuses. In this case, the network storage device may limit total sending traffic of all to-be-obtained data of the application service provider to keep the total sending traffic below the network bandwidth purchased by the service provider. The network storage device may control a bandwidth of each data obtaining apparatus or each type of data obtaining apparatuses. The network storage device may also allocate a corresponding network resource to a data obtaining apparatus according to authorized resource information of the data obtaining apparatus. For example, if the application service provider purchases a certain number of network resources, for example, bandwidth, and provides different resources for each data obtaining apparatus that accesses to-be-obtained data provided by it, the service device sends the authorized resource information together to the data obtaining apparatus, the data obtaining apparatus carries the authorized resource information when requesting the to-be-obtained data, and the network storage device performs resource control according to the authorized resource information.

The network storage device may also control the number of connections of the data obtaining apparatus according to the number of connections. For example, if a certain application service provider purchases connection capabilities for 90 data obtaining apparatuses, when a 91^{st} data obtaining apparatus requests the to-be-obtained data from the network storage device, the network storage device may reject the request.

The network storage device may also provide a security assurance capability to separate network storage resources belonging to different data obtaining apparatuses or users using the data obtaining apparatus, which prevents the data obtaining apparatuses or the users using the data obtaining apparatus from accessing an unauthorized network storage resource. For example, virtual disks are set for different service devices, and each virtual disk has its own access right control.

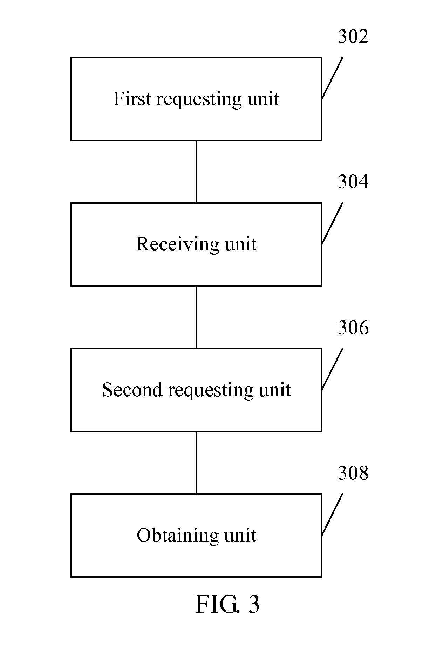

FIG. 3 is a block diagram of a data obtaining apparatus according to another embodiment of the present invention. The data obtaining apparatus is a client device that requests obtaining data of a network application. The client device may usually be a personal computer, a mobile Internet device, a mobile phone, a set-top box, a television set, and so on. The apparatus includes:
A first requesting unit 302 is configured to request to-be-obtained data from a service device.

The foregoing service device may be a service device belonging to an application service provider, such as a VOD server of a VOD service provider, or a Website server of a World Wide Web storage service provider. The service device may also belong to an individual user. As an application service provider, the user provides an application service for a data obtaining apparatus. In this case, the service device may also be a personal computer, a mobile Internet device, a mobile phone, a set-top box, a television set, and so on. The application service provider purchases a network storage resource from a network storage service provider. The network storage resource may be indicated by storage capacity, a network reading/writing bandwidth, or the number of users of concurrent access, and so on.

When the first requesting unit 302 requests the to-be-obtained data from the service device, multiple different protocols may be adopted, such as an HTTP protocol, and the requesting the to-be-obtained data from the service device may also be performed by utilizing a UDP-based or TCP-based application, for example, a peer-to-peer architecture-based file transfer protocol or a file transfer function of instant messaging software.

Before the first requesting unit 302 requests the to-be-obtained data from the service device, a service device may store service data provided by itself in a network storage device provided by a network storage service provider. The foregoing to-be-obtained data is part of the service data stored by the service device in the network storage device, or the to-be-obtained data is the foregoing service data. When the to-be-obtained data is the foregoing service data, the network storage device receives a request for storing the to-be-obtained data, where the request for storing the to-be-obtained data is sent by the service device, and the request includes the to-be-obtained data. The network storage device stores the to-be-obtained data. The network storage device sends storage location information about the to-be-obtained data to the service device. When the to-be-obtained data is part of the service data, the network storage device receives the service data that includes the to-be-obtained data and is sent by the service device, and stores the service data. The network storage device sends storage location information about the service data to the service device, where the storage location information includes the storage location information about the to-be-obtained data. For example, the service device stores three segments of video data in the network storage device; the network storage device sends storage location information about the three segments of video data to the service device; when the data obtaining apparatus requests a certain segment of video data from the service device, the service device may respond to the request of the data obtaining apparatus according to storage location information about this segment of video data in the network storage device.

The service device may also receive storage location information about existing data in the network storage device. When the data obtaining apparatus requests the data from the service device, the service device may respond to the request of the data obtaining apparatus according to the storage location information. For example, if the service device is a VOD server of a certain service provider, and another service provider has stored a segment of video data in the network storage device, the VOD server may directly obtain storage location information about the video data according to a license agreement between service providers, without the need of storing again. Alternatively, when the VOD server stores same video data, if the network storage device finds that another service provider has stored the video data, the video data is not stored again, but storage location information is directly sent to the service device.

When the service device fixedly shares a segment of storage space of the network storage device, the service device may also directly send, in the request for storing the to-be-obtained data, where the request for storing the to-be-obtained data is sent by the service device, service data including the to-be-obtained data, and storage location information specifying a storage location of the service data to the network storage device. The network storage device stores the service data according to the storage location information. In this case, the network storage device does not need to send the storage location information to the service device.

The network storage device may provide a security assurance capability to separate network storage resources belonging to different data obtaining apparatuses or users using the data obtaining apparatus, which prevents the data obtaining apparatuses or the users using the data obtaining apparatus from accessing an unauthorized network storage resource. For example, virtual disks are set for different service devices, and each virtual disk has its own access right control. In this case, the network storage device may have multiple domain names or IP addresses, which respectively correspond to different virtual disks. Before receiving the request for storing the to-be-obtained data, where the request for storing the to-be-obtained data is sent by the service device, the network storage device may select a domain name or an IP address, where the domain name or the IP address corresponds to the service device, from the multiple domain names or IP addresses, and send the selected domain name or IP address to the service device.

The network storage device may also be connected to multiple storage sub-devices. For example, the network storage device is a router, the router is connected to multiple devices having a network storage function, and these devices are managed by the network storage device. The network storage device and its connected multiple storage sub-devices have independent IP addresses. In this case, the network storage device sends, to the service device, its own domain name or IP address, and an IP address of a storage sub-device that the service device has a right to access. The IP address of the storage sub-device may be sent as part of storage location information.

The service device may write same data into different network storage devices to provide data backup and disaster tolerance capabilities. When writing the same data into different network storage devices, the service device may write the data into only one of the network storage devices, and instruct the network storage device to copy the data onto another network storage device. The service device may also delete specific data in specific network storage according to a policy.

The network storage device may be a network node having a data storage capability. A network storage capability includes operations such as reading, writing, and deleting for the network storage device through a network. For example, the network storage capability is introduced into the network node in the following manners: adding a board inside the network node, where the board integrates a storage capability; adding a board inside the network node, where the board provides a storage interface, and the storage interface is connected to an external storage resource, such as a disk array and a solid state disk; setting an independent device having a storage capability outside the network node, where the device is connected to the network node through a network interface; setting an independent device outside the network node, where the device is connected to the network node through a network interface, and the independent device provides a storage interface for connecting to an external storage resource.

A receiving unit 304 is configured to receive a redirection message sent by the service device, where the redirection message includes an address of a network storage device that stores the to-be-obtained data, and storage location information about the to-be-obtained data in the network storage device.

The service device sends the redirection message to the data obtaining apparatus according to the request of the data obtaining apparatus. The redirection message includes the address of the network storage device and the storage location information about the to-be-obtained data in the network storage device. When multiple network storage devices have the to-be-obtained data requested by the data obtaining apparatus, the service device may select an address of one or multiple network storage devices and its storage location information according to a preconfigured policy, and send the address of the one or multiple network storage devices and its storage location information to the data obtaining apparatus by using the redirection message. For example, the preconfigured policy may be one or multiple of the following policies: selecting a network storage device which is the closest to the data obtaining apparatus, selecting a network storage device whose network service provider is the same as that of the data obtaining apparatus, selecting a current idle network storage device (the number of data obtaining apparatuses accessing the network storage device is small). When the service device selects multiple network storage devices, priorities may be assigned to these network storage devices in the redirection message. The data obtaining apparatus may select one or multiple network storage devices having a highest priority from available network storage devices to obtain the to-be-obtained data.

The service device may also select multiple network storage devices for providing parts of the to-be-obtained data separately. For example, the service device divides one segment of video data into three segments, which are separately stored in three network storage devices. The service device sends the redirection message to the data obtaining apparatus, where the redirection message includes addresses of the three network storage devices and storage location information about the parts of the to-be-obtained data separately stored in the network storage devices. After obtaining the parts of the to-be-obtained data, the data obtaining apparatus reconstructs, according to the parts of the to-be-obtained data, the to-be-obtained data. The service device may also divide the to-be-obtained data into multiple parts, and stores these parts in each network storage device. When the service device sends the redirection message to the data obtaining apparatus, the redirection message includes the multiple network storage devices for separately providing one or multiple parts of the to-be-obtained data. By using this manner, a speed of obtaining the to-be-obtained data by the data obtaining apparatus is increased.

The storage location information about the to-be-obtained data in the network storage device may be represented by block information or file information of the stored to-be-obtained data, according to different protocols supported by the network storage device.

When the network storage device supports a block-based storage access protocol, for example, supports an Internet small computer system interface iSCSI, the block information of the stored to-be-obtained data may be used to represent the storage location information. For example, the storage location information may be represented as a location of a start block of the to-be-obtained data in the network storage device and the number of blocks of the to-be-obtained data; a location of a start block of the to-be-obtained data in the network storage device and a location of an end block of the to-be-obtained data in the network storage device; or the number of blocks of the to-be-obtained data and a location of an end block of the to-be-obtained data in the network storage device. When the to-be-obtained data is not stored continuously in the network storage device, the storage location information may also be a combination of multiple pieces of block information. When the network storage device separately assigns a virtual disk for each service device, a mapping from a physical storage location to its virtual disk is established. For example, if a location of the to-be-obtained data stored by a service device in a physical resource is an 11^{th} block to a 100^{th} block, and the service device uses a No. 10 virtual disk, the to-be-obtained data is mapped to a 1^{st} block to a 90^{th} block in the No. 10 virtual disk. In this case, the storage location information includes a virtual disk identity and block information. When the network storage device supports a file-based network file system, for example, an NFS or an SMB, the file information may be used to represent the storage location information. For example, the storage location information may be represented as a directory of the to-be-obtained data in the network storage device and a file name of the to-be-obtained data; or an object name of the to-be-obtained data in the network storage device.

The address of the network storage device may be the domain name of the network storage device or the IP address of the network storage device, and may also be a specific ID, for example, the specific identity may be an iSCSI name in an iSCSI protocol. For the iSCSI protocol, the address of the network storage device is generally represented by the iSCSI name. After obtaining the iSCSI name, a user obtains the IP address of the network storage device by using an iSNS. The iSNS is generally applied in an enterprise network, and it is required that an iSNS server is deployed in each enterprise network. The iSNS is not applicable to a carrier network. Therefore, in the embodiment of the present invention, the service device directly sends the domain name of the network storage device or the IP address of the network storage device to the data obtaining apparatus, which may avoid deployment of the iSNS server, so that the network storage device may be deployed in a wide area network.

When the network storage device is also connected to multiple storage sub-devices, the storage location information about the to-be-obtained data in the network storage device may also include IP addresses of the storage sub-devices.

A second requesting unit 306 is configured to request the to-be-obtained data from the network storage device according to the address of the network storage device that stores the to-be-obtained data, and the storage location information about the to-be-obtained data in the network storage device.

The data obtaining apparatus is redirected to the network storage device according to the address that is of the network storage device and in the redirection message. The address of the network storage device may be the domain name of the network storage device or the IP address of the network storage device, and may also be the specific identity, for example, the specific identity may be the iSCSI name in the iSCSI protocol. The data obtaining apparatus sends a request for obtaining the to-be-obtained data to the address of the network storage device. The request may be an iSCSI message, an NFS message, or an SMB message according to different protocols supported by the network storage device. The request includes the storage location information about the to-be-obtained data in the network storage device.

A protocol between the data obtaining apparatus and the network storage device is independent of a protocol between the data obtaining apparatus and the service device, and different protocol types are adopted. Therefore, when the data obtaining apparatus requests the to-be-obtained data from the service device, no matter whether the HTTP protocol, or the P2P architecture-based file transfer protocol, or the file transfer function of the instant messaging software is adopted, after being redirected to the network storage device, the data obtaining apparatus obtains the to-be-obtained data by adopting protocols, such as iSCSI, NFS, or SMB, that may directly read data from corresponding storage location information in the network storage device according to the storage location information. In this way, the network storage device does not need to support various complex protocols, thereby reducing complexity of the network storage device.

An obtaining unit 308 is configured to obtain the to-be-obtained data sent by the network storage device.

If the data obtaining apparatus separately receives the parts of the to-be-obtained data from the multiple network storage devices, the data obtaining apparatus also needs to reconstruct the to-be-obtained data according to these parts to obtain the to-be-obtained data.

The network storage device may authenticate the data obtaining apparatus or a user using the data obtaining apparatus, and there may be multiple authentication manners.

For example, the application service provider determines authentication information about data obtaining apparatuses or users using the data obtaining apparatus, that is, it is set that which data obtaining apparatuses or users using the data obtaining apparatus may read or rewrite the data, and network resources are allocated to the data obtaining apparatuses or the users using the data obtaining apparatus. A service device of the application service provider sends the authentication information about the data obtaining apparatus to the network storage device. The application service provider may send the authentication information to the network storage device in an encryption manner, for example, by using transport security protocols such as IPsec, TLS, or DTLS.

The authentication information may be represented by an ACL. The ACL is stored in the network storage device. For example, the ACL may be represented as "Content-XYZ # access-list N permit R UserIDx AllowedBWx AllowedConnectionsx", where "Content-XYZ" is an identity of the to-be-obtained data. "N" is a sequence number of the ACL, which facilitates an overall operation performed by the application service provider on a group of the ACL. "permit" identifies permission. "R" identifies that a right is a read right. "UserIDx" is an ID of the data obtaining apparatus or the user using the data obtaining apparatus, may be a fixed-length character string set by the application service provider, and is used for uniquely identifying, on the network storage device, the data obtaining apparatus or the user using the data obtaining apparatus; and an IP address of the data obtaining apparatus may also be used as the ID of the data obtaining apparatus, or the ID of the user and an IP address of the data obtaining apparatus may be used together. "AllowedBWx" is an authorized access bandwidth, and "AllowedConnectionsx" is the number of allowed connections. The ACL may also include a public key and a signature algorithm that are of the user using the data obtaining apparatus. The network storage device verifies a signature after receiving the request of the data obtaining apparatus to authenticate the user using the data obtaining apparatus.

After the application service provider determines the authentication information about the data obtaining apparatuses or the users using the data obtaining apparatus, the service device does not need to send the authentication information to the network storage device in advance. After receiving the request of the data obtaining apparatus for the to-be-obtained data, the service device sends the authentication information to the network storage device.

When the network storage device knows a public key and a signature algorithm that are of the service device, after receiving the request of the data obtaining apparatus for the to-be-obtained data, the service device may also sign the authentication information by using its own private key, and then send the authentication information to the data obtaining apparatus. The authentication information may include the ID of the to-be-obtained data. Optionally, the authentication information may also include the ID of the data obtaining apparatus or the user using the data obtaining apparatus, and a right of the data obtaining apparatus or the user using the data obtaining apparatus. Optionally, the authentication information may also include a network resource allocated to the data obtaining apparatus or the user using the data obtaining apparatus. Optionally, the authentication information may also include the public key and the signature algorithm that are of the user using the data obtaining apparatus, or a certificate of the user using the data obtaining apparatus. Parts of the foregoing authentication information may be signed separately or signed together. Because the authentication information is signed by the service device, the data obtaining apparatus cannot tamper with it. The data obtaining apparatus uses a private key of the user using the data obtaining apparatus to sign the authentication information and then sends the signed authentication information to the network storage device. The network storage device authenticates, according to the foregoing authentication information, the data obtaining apparatus or the user using the data obtaining apparatus.

The network storage device may also send the authentication information to the service device or a dedicated authentication service apparatus for authentication by using a protocol. The foregoing protocol may be a RADIUS or Diameter protocol. The service device or the dedicated authentication service apparatus returns an authentication and authorization result to the network storage device.

When sending the to-be-obtained data, the network storage device may perform resource control according to a network storage resource purchased by the application service provider from the network storage service provider. For example, a certain application service provider purchases a certain amount of network bandwidth, and the application service provider may authorize multiple data obtaining apparatuses. In this case, the network storage device may limit total sending traffic of all to-be-obtained data of the application service provider to keep the total sending traffic below the network bandwidth purchased by the service provider. The network storage device may control a bandwidth of each data obtaining apparatus or each type of data obtaining apparatuses. The network storage device may also allocate a corresponding network resource to a data obtaining apparatus according to authorized resource information of the data obtaining apparatus. For example, if the application service provider purchases a certain number of network resources, for example, bandwidth, and provides different resources for each data obtaining apparatus that accesses to-be-obtained data provided by it, the service device sends the authorized resource information together to the data obtaining apparatus, the data obtaining apparatus carries the authorized resource information when requesting the to-be-obtained data, and the network storage device performs resource control according to the authorized resource information.

The network storage device may also control the number of connections of the data obtaining apparatus according to the number of connections. For example, if a certain application service provider purchases connection capabilities for 90 data obtaining apparatuses, when a 91^{st} data obtaining apparatus requests the to-be-obtained data from the network storage device, the network storage device may reject the request.

The network storage device may also provide a security assurance capability to separate network storage resources belonging to different data obtaining apparatuses or users using the data obtaining apparatus, which prevents the data obtaining apparatuses or the users using the data obtaining apparatus from accessing an unauthorized network storage resource. For example, virtual disks are set for different service devices, and each virtual disk has its own access right control.

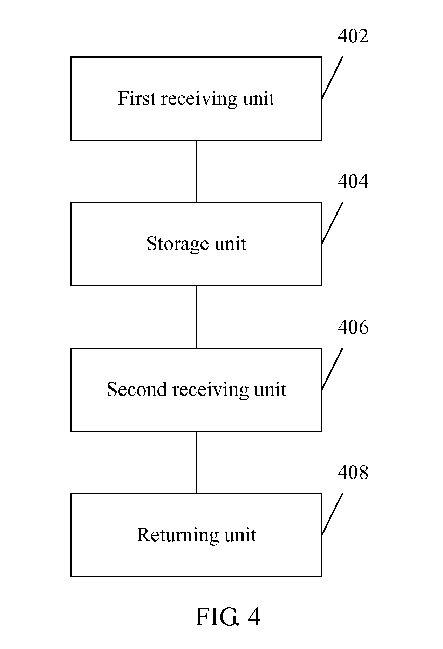

FIG. 4 is a block diagram of a network storage device according to another embodiment of the present invention. The network storage device may be a network node having a data storage capability. A network storage capability includes operations such as reading, writing, and deleting for the network storage device through a network. For example, the network storage capability is introduced into the network node in the following manners: adding a board inside the network node, where the board integrates a storage capability; adding a board inside the network node, where the board provides a storage interface, and the storage interface is connected to an external storage resource, such as a disk array and a solid state disk; setting an independent device having a storage capability outside the network node, where the device is connected to the network node through a network interface; setting an independent device outside the network node, where the device is connected to the network node through a network interface, and the independent device provides a storage interface for connecting to an external storage resource. The network storage device includes:
A first receiving unit 402 is configured to receive a request for storing to-be-obtained data, where the request for storing the to-be-obtained data is sent by a service device, and the request for storing the to-be-obtained data includes the to-be-obtained data.

The foregoing service device may be a service device belonging to an application service provider, such as a VOD server of a VOD service provider, or a Website server of a World Wide Web storage service provider. The service device may also belong to an individual user. As an application service provider, the user provides an application service for a data obtaining apparatus. In this case, the service device may also be a personal computer, a mobile Internet device, a mobile phone, a set-top box, a television set, and so on. The application service provider purchases a network storage resource from a network storage service provider. The network storage resource may be indicated by storage capacity, a network reading/writing bandwidth, or the number of users of concurrent access, and so on.

The service device may store service data provided by itself in the network storage device provided by the network storage service provider by adopting a manner of sending the request for storing the to-be-obtained data. The to-be-obtained data is part of the service data stored by the service device in the network storage device, or the to-be-obtained data is the foregoing service data.

When the service device fixedly shares a segment of storage space of the network storage device, the service device may also directly send, in the request for storing the to-be-obtained data, where the request for storing the to-be-obtained data is sent by the service device, service data including the to-be-obtained data, and storage location information specifying a storage location of the service data to the network storage device.

The network storage device may provide a security assurance capability to separate network storage resources belonging to different data obtaining apparatuses or users using the data obtaining apparatus, which prevents the data obtaining apparatuses or the users using the data obtaining apparatus from accessing an unauthorized network storage resource. For example, virtual disks are set for different service devices, and each virtual disk has its own access right control. In this case, the network storage device may have multiple domain names or IP addresses, which respectively correspond to different virtual disks. Before receiving the request for storing the to-be-obtained data, where the request for storing the to-be-obtained data is sent by the service device, the network storage device may select a domain name or an IP address, where the domain name or the IP address corresponds to the service device, from the multiple domain names or IP addresses, and send the selected domain name or IP address to the service device.

The service device may write same data into different network storage devices to provide data backup and disaster tolerance capabilities. When writing the same data into different network storage devices, the service device may write the data into only one of the network storage devices, and instruct the network storage device to copy the data onto another network storage device. The service device may also delete specific data in specific network storage according to a policy.

A storage unit 404 is configured to store, by the network storage device, the to-be-obtained data. After storing the to-be-obtained data, the network storage device may also send storage location information about the to-be-obtained data to the service device. When the to-be-obtained data is the foregoing service data, the network storage device receives the request for storing the to-be-obtained data, where the request for storing the to-be-obtained data is sent by the service device. The request includes the to-be-obtained data. The network storage device stores the to-be-obtained data. When the to-be-obtained data is part of the service data, the network storage device receives the service data which includes the to-be-obtained data and is sent by the service device, and stores the service data. The network storage device sends storage location information about the service data to the service device. The storage location information includes the storage location information about the to-be-obtained data. For example, the service device stores three segments of video data into the network storage device; the network storage device sends storage location information about the three segments of video data to the service device; when the data obtaining apparatus requests a certain segment of video data from the service device, the service device may respond to the request of the data obtaining apparatus according to storage location information about this segment of video data in the network storage device.

The network storage device may also be connected to multiple storage sub-devices. For example, the network storage device is a router, the router is connected to multiple devices having a network storage function, and these devices are managed by the network storage device. The network storage device and its connected multiple storage sub-devices have independent IP addresses. In this case, the network storage device sends, to the service device, its own domain name or IP address, and an IP address of a storage sub-device that the service device has a right to access. The IP address of the storage sub-device may be sent as part of storage location information.

When the service device directly sends, in the request for storing the to-be-obtained data, where the request for storing the to-be-obtained data is sent by the service device, the service data including the to-be-obtained data, and the storage location information specifying the storage location of the service data to the network storage device, the storage unit 404 stores the service data according to the storage location information. In this case, the network storage device does not need to send the storage location information to the service device.

The storage location information about the to-be-obtained data in the network storage device may be represented by block information or file information of the stored to-be-obtained data, according to different protocols supported by the network storage device.

When the network storage device supports a block-based storage access protocol, for example, supports an iSCSI, the block information of the stored to-be-obtained data may be used to represent the storage location information. For example, the storage location information may be represented as a location of a start block of the to-be-obtained data in the network storage device and the number of blocks of the to-be-obtained data; a location of a start block of the to-be-obtained data in the network storage device and a location of an end block of the to-be-obtained data in the network storage device; or the number of blocks of the to-be-obtained data and a location of an end block of the to-be-obtained data in the network storage device. When the to-be-obtained data is not stored continuously in the network storage device, the storage location information may also be a combination of multiple pieces of block information. When the network storage device separately assigns a virtual disk for each service device, a mapping from a physical storage location to its virtual disk is established. For example, if a location of the to-be-obtained data stored by a service device in a physical resource is an 11^{th} block to a 100^{th} block, and the service device uses a No. 10 virtual disk, the to-be-obtained data is mapped to a 1^{st} block to a 90^{th} block in the No. 10 virtual disk. In this case, the storage location information includes a virtual disk identity and block information.

When the network storage device supports a file-based network file system, for example, an NFS or an SMB, the file information may be used to represent the storage location information. For example, the storage location information may be represented as a directory of the to-be-obtained data in the network storage device and a file name of the to-be-obtained data; or an object name of the to-be-obtained data in the network storage device.

When the network storage device is also connected to multiple storage sub-devices, the storage location information about the to-be-obtained data in the network storage device may also include IP addresses of the storage sub-devices.

A second receiving unit 406 is configured to receive a request of the data obtaining apparatus for the to-be-obtained data, where the request includes storage location information about the to-be-obtained data.

The foregoing data obtaining apparatus is a client device that requests obtaining data of a network application. The client device may usually be a personal computer, a mobile Internet device, a mobile phone, a set-top box, a television set, and so on.

The data obtaining apparatus requests the to-be-obtained data from the service device, and receives a redirection message sent by the service device. The data obtaining apparatus is redirected to the network storage device according to an address that is of the network storage device and in the redirection message. The address of the network storage device may be a domain name of the network storage device or an IP address of the network storage device, and may also be a specific identity, for example, the specific identity may be an iSCSI name in an iSCSI protocol. The data obtaining apparatus sends a request for obtaining the to-be-obtained data to the address of the network storage device. The request may be an iSCSI message, an NFS message, or an SMB message according to different protocols supported by the network storage device. The request includes the storage location information about the to-be-obtained data in the network storage device.

The address of the network storage device may be the domain name of the network storage device or the IP address of the network storage device, and may also be the specific ID, for example, the specific identity may be the iSCSI name in the iSCSI protocol. For the iSCSI protocol, the address of the network storage device is generally represented by the iSCSI name. After obtaining the iSCSI name, a user obtains the IP address of the network storage device by using an Internet storage name service. The iSNS is generally applied in an enterprise network, and it is required that an iSNS server is deployed in each enterprise network. The iSNS is not applicable to a carrier network. Therefore, in the embodiment of the present invention, the service device directly sends the domain name of the network storage device or the IP address of the network storage device to the data obtaining apparatus, which may avoid deployment of the iSNS server, so that the network storage device may be deployed in a wide area network.

When the data obtaining apparatus requests the to-be-obtained data from the service device, multiple different protocols, such as an HTTP protocol, may be adopted and may utilize a UDP-based or TCP-based application to request the to-be-obtained data from the service device, for example, a peer-to-peer architecture-based file transfer protocol or a file transfer function of instant messaging software.

A protocol between the data obtaining apparatus and the network storage device is independent of a protocol between the data obtaining apparatus and the service device, and different protocol types are adopted. Therefore, when the data obtaining apparatus requests the to-be-obtained data from the service device, no matter whether the HTTP protocol, or the P2P architecture-based file transfer protocol, or the file transfer function of the instant messaging software is adopted, after being redirected to the network storage device, the data obtaining apparatus obtains the to-be-obtained data by adopting protocols, such as iSCSI, NFS, or SMB, that may directly read data from corresponding storage location information in the network storage device according to the storage location information. In this way, the network storage device does not need to support various complex protocols, thereby reducing complexity of the network storage device.

A returning unit 408 is configured to return the to-be-obtained data to the data obtaining apparatus according to the storage location information.

The network storage device may authenticate the data obtaining apparatus or a user using the data obtaining apparatus, and there may be multiple authentication manners.

For example, the application service provider determines authentication information about data obtaining apparatuses or users using the data obtaining apparatus, that is, it is set that which data obtaining apparatuses or users using the data obtaining apparatus may read or rewrite the data, and network resources are allocated to the data obtaining apparatuses or the users using the data obtaining apparatus. A service device of the application service provider sends the authentication information about the data obtaining apparatus to the network storage device. The application service provider may send the authentication information to the network storage device in an encryption manner, for example, by using transport security protocols such as IPsec, TLS, or DTLS.

The authentication information may be represented by an ACL. The ACL is stored in the network storage device. For example, the ACL may be represented as "Content-XYZ # access-list N permit R UserIDx AllowedBWx AllowedConnectionsx", where "Content-XYZ" is an identity of the to-be-obtained data. "N" is a sequence number of the ACL, which facilitates an overall operation performed by the application service provider on a group of the ACL. "permit" identifies permission. "R" identifies that a right is a read right. "UserIDx" is an ID of the data obtaining apparatus or the user using the data obtaining apparatus, may be a fixed-length character string set by the application service provider, and is used for uniquely identifying, on the network storage device, the data obtaining apparatus or the user using the data obtaining apparatus; and an IP address of the data obtaining apparatus may also be used as the ID of the data obtaining apparatus, or the ID of the user and an IP address of the data obtaining apparatus may be used together. "AllowedBWx" is an authorized access bandwidth, and "AllowedConnectionsx" is the number of allowed connections. The ACL may also include a public key and a signature algorithm that are of the user using the data obtaining apparatus. The network storage device verifies a signature after receiving the request of the data obtaining apparatus to authenticate the user using the data obtaining apparatus.

After the application service provider determines the authentication information about the data obtaining apparatuses or the users using the data obtaining apparatus, the service device does not need to send the authentication information to the network storage device in advance. After receiving the request of the data obtaining apparatus for the to-be-obtained data, the service device sends the authentication information to the network storage device.

When the network storage device knows a public key and a signature algorithm that are of the service device, after receiving the request of the data obtaining apparatus for the to-be-obtained data, the service device may also sign the authentication information by using its own private key, and then send the authentication information to the data obtaining apparatus. The authentication information may include the ID of the to-be-obtained data. Optionally, the authentication information may also include the ID of the data obtaining apparatus or the user using the data obtaining apparatus, and a right of the data obtaining apparatus or the user using the data obtaining apparatus. Optionally, the authentication information may also include a network resource allocated to the data obtaining apparatus or the user using the data obtaining apparatus. Optionally, the authentication information may also include the public key and the signature algorithm that are of the user using the data obtaining apparatus, or a certificate of the user using the data obtaining apparatus. Parts of the foregoing authentication information may be signed separately or signed together. Because the authentication information is signed by the service device, the data obtaining apparatus cannot tamper with it. The data obtaining apparatus uses a private key of the user using the data obtaining apparatus to sign the authentication information and then sends the signed authentication information to the network storage device. The network storage device authenticates, according to the foregoing authentication information, the data obtaining apparatus or the user using the data obtaining apparatus.

The network storage device may also send the authentication information to the service device or a dedicated authentication service apparatus for authentication by using a protocol. The foregoing protocol may be a RADIUS or Diameter protocol. The service device or the dedicated authentication service apparatus returns an authentication and authorization result to the network storage device.

When sending the to-be-obtained data, the network storage device may perform resource control according to a network storage resource purchased by the application service provider from the network storage service provider. For example, a certain application service provider purchases a certain amount of network bandwidth, and the application service provider may authorize multiple data obtaining apparatuses. In this case, the network storage device may limit total sending traffic of all to-be-obtained data of the application service provider to keep the total sending traffic below the network bandwidth purchased by the service provider. The network storage device may control a bandwidth of each data obtaining apparatus or each type of data obtaining apparatuses. The network storage device may also allocate a corresponding network resource to a data obtaining apparatus according to authorized resource information of the data obtaining apparatus. For example, if the application service provider purchases a certain number of network resources, for example, bandwidth, and provides different resources for each data obtaining apparatus that accesses to-be-obtained data provided by it, the service device sends the authorized resource information together to the data obtaining apparatus, the data obtaining apparatus carries the authorized resource information when requesting the to-be-obtained data, and the network storage device performs resource control according to the authorized resource information.

The network storage device may also control the number of connections of the data obtaining apparatus according to the number of connections. For example, if a certain application service provider purchases connection capabilities for 90 data obtaining apparatuses, when a 91^{st} data obtaining apparatus requests the to-be-obtained data from the network storage device, the network storage device may reject the request.

The network storage device may also provide a security assurance capability to separate network storage resources belonging to different data obtaining apparatuses or users using the data obtaining apparatus, which prevents the data obtaining apparatuses or the users using the data obtaining apparatus from accessing an unauthorized network storage resource. For example, virtual disks are set for different service devices, and each virtual disk has its own access right control.

By adopting the technical solutions provided in the embodiments of the present invention, data is obtained from the network storage device according to the storage location information about the to-be-obtained data in the network storage device. In this way, the universal data obtaining method and apparatus, and network storage method and device are provided for different network applications, thereby reducing the complexity of the network storage device. According to the preceding description of the embodiments, the skilled person may clearly understand that the present invention may be implemented by using software in combination with a necessary hardware platform, and certainly, may also be implemented by using hardware. However, in most cases, the former is a preferred implementation manner. Based on such understanding, all or part of the technical solutions of the present invention that makes contributions to the prior art may be embodied in the form of a software product. The software product may be used to execute the foregoing method processes. The computer software product may be stored in a storage medium, such as a ROM, a RAM, a magnetic disk, or a compact disk, and so on, and includes several instructions used for enabling a computer device (which may be a personal computer, a server, or a network device, and so on) to execute the methods described in the embodiments of the present invention or in some parts of the embodiments.

The foregoing is merely specific exemplary embodiments of the present invention, and is not intended to limit the protection scope of the present invention. Variations or replacements that may be easily derived by a person having ordinary skill in the art within the technical scope of the present invention should fall within the protection scope of the present invention. Therefore, the protection scope of the present invention shall be subject to the protection scope of the appended claims.

## Claims

1. A data obtaining method, comprising:
requesting to-be-obtained data from a service device;
receiving a redirection message sent by the service device, wherein the redirection message comprises an address of a network storage device that stores the to-be-obtained data, and storage location information about the to-be-obtained data in the network storage device;
requesting the to-be-obtained data from the network storage device according to the address of the network storage device that stores the to-be-obtained data, and the storage location information about the to-be-obtained data in the network storage device; and
obtaining the to-be-obtained data sent by the network storage device.

2. The method according to claim 1, wherein the storage location information comprises:
block information;
a virtual disk identity and block information;
an IP address of a storage sub-device and block information; or
an IP address of a storage sub-device, a virtual disk identity, and block information.

3. The method according to claim 2, wherein the block information comprises:
a location of a start block of the to-be-obtained data in the network storage device, and the number of blocks of the to-be-obtained data;
a location of a start block of the to-be-obtained data in the network storage device, and a location of an end block of the to-be-obtained data in the network storage device; or
the number of blocks of the to-be-obtained data, and a location of an end block of the to-be-obtained data in the network storage device.

4. The method according to claim 1 or 2, wherein the storage location information about the to-be-obtained data in the network storage device comprises:
a directory of the to-be-obtained data in the network storage device, and a file name of the to-be-obtained data; or
an object name of the to-be-obtained data in the network storage device.

5. A network storage method, comprising:
receiving a request for storing to-be-obtained data, wherein the request for storing the to-be-obtained data is sent by a service device, and the request for storing the to-be-obtained data comprises the to-be-obtained data;
storing the to-be-obtained data;
receiving a request of a data obtaining apparatus for the to-be-obtained data, wherein the request comprises storage location information about the to-be-obtained data; and
returning the to-be-obtained data to the data obtaining apparatus according to the storage location information.

6. The method according to claim 5, wherein
the request for storing the to-be-obtained data further comprises the storage location information about the to-be-obtained data; and
the storing the to-be-obtained data comprises: storing the to-be-obtained data according to the storage location information.

7. The method according to claim 5, wherein after the storing the to-be-obtained data, the method further comprises: sending the storage location information about the to-be-obtained data to the service device.

8. The method according to any one of claims 5 to 7, further comprising:
controlling a bandwidth of the data obtaining apparatus according to a network bandwidth;
controlling the number of connections of the data obtaining apparatus according to the number of connections; or
controlling a bandwidth of the data obtaining apparatus according to a network bandwidth, and controlling the number of connections of the data obtaining apparatus according to the number of connections.

9. The method according to any one of claims 5 to 8, wherein before the receiving a request for storing to-be-obtained data, wherein the request for storing the to-be-obtained data is sent by a service device, the method further comprises:
selecting a domain name or an IP address, wherein the domain name or the IP address corresponds to the service device, from multiple domain names or IP addresses, and sending the selected domain name or IP address to the service device.

10. The method according to any one of claims 5 to 9, wherein the storage location information comprises:
block information;
a virtual disk identity and block information;
an IP address of a storage sub-device and block information; or
an IP address of a storage sub-device, a virtual disk identity, and block information.

11. The method according to claim 10, wherein the block information comprises:
a location of a start block of the to-be-obtained data in the network storage device, and the number of blocks of the to-be-obtained data;
a location of a start block of the to-be-obtained data in the network storage device, and a location of an end block of the to-be-obtained data in the network storage device; or
the number of blocks of the to-be-obtained data, and a location of an end block of the to-be-obtained data in the network storage device.

12. The method according to any one of claims 5 to 9, wherein the storage location information comprises:
a directory of the to-be-obtained data in the network storage device, and a file name of the to-be-obtained data; or
an object name of the to-be-obtained data in the network storage device.

13. The method according to any one of claims 5 to 12, wherein before the returning the to-be-obtained data to the data obtaining apparatus according to the storage location information, the method further comprises:
authenticating, according to authentication information, the data obtaining apparatus or a user using the data obtaining apparatus;
wherein the authentication information comprises:
an access control list stored by itself, wherein the access control list comprises a public key and a signature algorithm of the user using the data obtaining apparatus;
an authentication information carried in the request of the data obtaining apparatus for the to-be-obtained data, wherein the authentication information is signed by using a private key by the service device, and the authentication information comprises an identity of the to-be-obtained data; or
an authentication information carried in the request of the data obtaining apparatus for the to-be-obtained data, wherein the authentication information is signed by using a private key by the service device, and the authentication information comprises an identity of the to-be-obtained data, a public key and a signature algorithm of the user using the data obtaining apparatus; or an identity of the to-be-obtained data, and a certificate of the user using the data obtaining apparatus.

14. The method according to claim 13, wherein the authenticating, according to authentication information, the data obtaining apparatus or a user using the data obtaining apparatus comprises:
sending the authentication information to the service device or a dedicated authentication service device for authentication.

15. A network storage device, comprising:
a first receiving unit, configured to receive a request for storing to-be-obtained data, wherein the request for storing the to-be-obtained data is sent by a service device, and the request for storing the to-be-obtained data comprises the to-be-obtained data;
a storage unit, configured to store the to-be-obtained data;
a second receiving unit, configured to receive a request of a data obtaining apparatus for the to-be-obtained data, wherein the request comprises storage location information about the to-be-obtained data; and
a returning unit, configured to return the to-be-obtained data to the data obtaining apparatus according to the storage location information.

16. The network storage device according to claim 15, wherein
the request for storing the to-be-obtained data further comprises storage location information specifying a storage location of service data of the to-be-obtained data; and
the storing the to-be-obtained data comprises: storing the service data of the to-be-obtained data according to the storage location information.

17. The network storage device according to claim 15 or 16, wherein the storage location information comprises:
block information;
a virtual disk identity and block information;
an IP address of a storage sub-device and block information; or
an IP address of a storage sub-device, a virtual disk identity, and block information.

18. The network storage device according to claim 17, wherein the block information comprises:
a location of a start block of the to-be-obtained data in the network storage device, and the number of blocks of the to-be-obtained data;
a location of a start block of the to-be-obtained data in the network storage device, and a location of an end block of the to-be-obtained data in the network storage device; or
the number of blocks of the to-be-obtained data, and a location of an end block of the to-be-obtained data in the network storage device.

19. A data obtaining apparatus, comprising:
a first requesting unit, configured to request to-be-obtained data from a service device;
a receiving unit, configured to receive a redirection message sent by the service device, wherein the redirection message comprises an address of a network storage device that stores the to-be-obtained data, and storage location information about the to-be-obtained data in the network storage device;
a second requesting unit, configured to request the to-be-obtained data from the network storage device according to the address of the network storage device that stores the to-be-obtained data, and the storage location information about the to-be-obtained data in the network storage device; and
an obtaining unit, configured to obtain the to-be-obtained data sent by the network storage device.

20. The data obtaining apparatus according to claim 19, wherein the storage location information comprises:
block information;
a virtual disk identity and block information;
an IP address of a storage sub-device and block information; or
an IP address of a storage sub-device, a virtual disk identity, and block information.

21. The data obtaining apparatus according to claim 20, wherein the block information comprises:
a location of a start block of the to-be-obtained data in the network storage device, and the number of blocks of the to-be-obtained data;
a location of a start block of the to-be-obtained data in the network storage device, and a location of an end block of the to-be-obtained data in the network storage device; or
the number of blocks of the to-be-obtained data, and a location of an end block of the to-be-obtained data in the network storage device.

22. The data obtaining apparatus according to claim 19 or 20, wherein the storage location information about the to-be-obtained data in the network storage device comprises:
a directory of the to-be-obtained data in the network storage device, and a file name of the to-be-obtained data; or
an object name of the to-be-obtained data in the network storage device.
